# EUROPÄISCHE PATENTSCHRIFT

(11) **EP 1 394 406 B1**
(45) Veröffentlichungstag und Bekanntmachung des Hinweises auf die Patenterteilung: **24.12.2014**
(21) Anmeldenummer: 03019056.5
(22) Anmeldetag: 22.08.2003
(51) Int. Cl.: F03D 11/00, F03D 9/00, F03D 1/06, H02K 7/18

(54) **Getriebelose Windturbine mit vielpoligem Synchrongenerator**
Gearless wind turbine with multipolar generator
Eolienne sans multiplicateur avec générateur multipolaire

(30) Priorität: 28.08.2002 DE 10239366
(43) Veröffentlichungstag der Anmeldung: 03.03.2004
(73) Patentinhaber: Klinger, Friedrich, Prof. Dr.-Ing., 66119 Saarbrücken (DE)
(72) Erfinder: Klinger, Friedrich, Prof. Dr.-Ing., 66119 Saarbrücken (DE)
(74) Vertreter: Wolff, Matthias

(56) Entgegenhaltungen:
- WO-A1-02/06667
- DE-A1- 19 711 869
- DE-C2- 4 402 184
- DE-C2- 19 636 591
- GB-A- 2 050 525
- RASMUSSEN P ET AL: "MULTIPOLE, PERMANENT MAGNET GENERATOR STUDIES AND PLANNED PROTOTYPES" EUROPEAN COMMUNITY WIND ENERGY CONFERENCE, Januar 1993 (1993-01), Seiten 643-650, XP000606076

## Beschreibung

Die Erfindung betrifft eine Windenergieanlage für Nennleistungen im Megawattbereich , deren Windrotor drei Flügel aufweist und direkt mit einem Magnete tragenden Läuferring eines Generators verbunden ist, wobei die Flügel des Windrotors auf dem Läuferring angeordnet sind.

Getriebelosen Windenergieanlagen mit einem vielpoligen Synchrongenerator sind durch Benutzung sowie z.B. aus der DE 44 02 184 A1 bekannt. Eine den Windrotor und Generator umfassende Baueinheit dieser bekannten Windenergieanlagen ist auf der Spitze eines Trägerturms um eine vertikale Achse verschwenkbar angeordnet. Ein äußerer Läuferring des Generators steht über eine axiale Verlängerung sowie von der Verlängerung nach innen gerichtete radiale Stege bzw. Flansche in Verbindung mit einer Nabe, über die der mit dieser Nabe verbundene Rotor fliegend auf einer drehfest mit dem Ständer des Generators verbundenen Achse gelagert ist.

Die WO 0206667 A1 beschreibt eine Windenergieanlage mit einem Rotor, dessen Blattnabe axial versetzt zum Innenrotor eines Generators auf einem Achszapfen des Innenrotors angeordnet ist.

Die Blattnabe umfasst einen Nabenkern mit einer den Achszapfen aufnehmenden Buchse sowie drei auf dem Nabenkern angeordnete Außenteile, auf denen jeweils ein Rotorblatt drehbar gelagert ist. Die in Umfangsrichtung zueinander im Abstand angeordneten Außenteile sind mit dem Nabenkern jeweils über einen Flansch verbunden.

Windenergieanlagen mit dem eingangs erwähnten Grundaufbau gehen aus Rasmussen P et al "Multipole, permanent magnet generator studies and planned prototypes", European Community Wind Energy Conference, Januar 1993, Seiten 643-650, XP000606076 und der DE 197 11 869 A1 hervor. Diese Dokumente betreffen Windenergieanlagen für verhältnismäßig geringe Nennleistungen.

Der vorliegenden Erfindung liegt die Aufgabe zugrunde, eine Windenergieanlage mit den eingangs genannten Konstruktionsmerkmalen für größere Nennleistungen zu schaffen.

Die diese Aufgabe lösende Windenergieanlage nach der Erfindung ist dadurch gekennzeichnet, dass die Flügel mit dem Läuferring, um ihre Längsachse drehbar, jeweils über ein an dem Läuferring einen Rohransatz bildendes Segment verbunden sind, dass die Segmente baugleich sind und sich jeweils über ein Drittel des Umfangs des Läuferrings erstrecken und dass die mit dem Läuferring verbundenen Segmente untereinander über an den Segmenten gebildete Flansche verbunden sind.

Die erfindungsgemäß hergestellte Rotornabe ist ausreichend stabil, um für Leistungen im Megawattbereich ausgelegte Rotorflügel drehbar aufzunehmen, andererseits lässt sich der Generator einer solchen Windenergieanlage in einfacher Weise herstellen und montieren. Der Rotor ist in Richtung zum Trägerturm zurückversetzt und ein zentrales, die Flügel haltendes Mittelstück des Rotors steht in Richtung der Rotordrehachse nicht weiter als der Generator vom Trägerturm vor.

In einer besonders bevorzugten Ausführungsform der Erfindung ist der Rotor bzw. Läuferring auf einer rohrförmigen, die Ständerwicklungen haltenden Tragstruktur gelagert, wobei gegenüber herkömmlichen Windenergieanlagen eine besonders große Material- und Gewichtsreduzierung erreicht wird, wenn der Radius der Träger struktur bzw. der Lager nahe an den Luftspaltradius des Generators heranreicht. In diesem Fall ist selbst bei schwacher, materialsparender Ausbildung der Generatorteile die Luftspaltgeometrie des Generators ausreichend konstant.

Der Läuferring kann auf mehreren zueinander axial im Abstand angeordneten Lagern drehbar sein.

Der Läuferring ist zweckmäßig zweifach gelagert, wobei zwischen den beiden Lagern die Ständerwicklungen angeordnet sind.

In weiterer Ausgestaltung der Erfindung ist durch die beiden Lager eine sogenannte O-Anordnung gebildet, d.h. die Verbindungsachsen der Berührungspunkte der Kugeln in den Wälzlagern bzw. die Gleitlagerflächen sind zueinander geneigt. Vorteilhaft können die beiden Lager dann gemeinsam zur Rotorebene senkrechte Kippkräfte abtragen. Wird nur ein einziges Wälzlager verwendet, so ist vorzugsweise ein zur Abtragung entsprechender Kippmomente geeignetes Momentenlager, z.B. mit an vier Punkten gelagerten Kugeln, zu verwenden.

Gleitlager weisen vorzugsweise aneinander anliegende Gleitlagerflächen entsprechend einer Kugeloberfläche auf, durch die stets eine optimale Anpassung der Gleitflächen aneinander gesichert ist.

Vorteilhaft kann ein gemeinsamer Ölkreislauf für die Schmierung der Lagerung und Kühlung der Ständerwicklungen gebildet sein.

Die Rohransätze weisen Flansche für die Aufnahme von Lagern auf. Die mit dem Läuferring z.B. durch Schweißen verbundenen Rohransätze bilden mit dem Läuferring ein Mittelstück des Rotors, das mechanisch sehr stabil ist. Der minimale Abstand der Flanschebene zur Rotordrehachse braucht nicht viel größer als der Außenradius des Läuferrings zu sein.

Der Radius der rohrförmigen Tragstruktur kann größer als der minimale Nabenlagerradius sein. Die Segmente können Randaufweitungen zur Bildung eines Lagersitzes oder einer Gleitlagerfläche für die Lagerung des Windrotors aufweisen.

Vorteilhaft kann der Läuferring auf seiner dem Ständer abgewandten Seite mit Versteifungsrippen versehen sein, welche die Formbeständigkeit des Läuferrings und damit eine konstante Geometrie des Generatorluftspalts bei geringstmöglichem Materialeinsatz für den Läuferring sichern.

Die Erfindung soll nun anhand von Ausführungsbeispielen und der beiliegenden, sich auf diese Ausführungsbeispiele beziehenden Zeichnungen näher erläutert werden. Es zeigen:
- Fig. 1: eine geschnittene Teilansicht einer getriebelosen Windenergieanlage,
- Fig. 2: eine Vorderansicht einer in der Windenergieanlage von Fig. 1 verwendbaren Windrotornabe,
- Fig. 3: die Windrotornabe von Fig. 2 in Verbindung mit einem Trägerturm der Windenergieanlage,
- Fig. 4: eine geschnittene Teilansicht einer weiteren getriebelosen Windenergieanlage,
- Fig. 5: die Rotornabe der Windenergieanlage von Fig. 4 in perspektivischer Ansicht in Verbindung mit einem Trägerturm,
- Fig. 6: weitere Ausführungsbeispiele für getriebelose Windenergieanlagen,
- Fig. 7: ein Ausführungsbeispiel für eine in einer Windenergieanlage nach der Erfindung verwendbare segmentierte Rotornabe,
- Fig. 8: eine Teilschnittansicht der Rotornabe von Fig. 7 gemäß Schnittlinie 1-1,
- Fig. 9: Ausführungsbeispiele für in einer Windenergieanlage nach der Erfindung verwendbare Windrotorlagerungen in Gleitlagerausführung, und
- Fig. 10: eine geschnittene Teilansicht einer weiteren Windenergieanlage nach dem Stand der Technik.

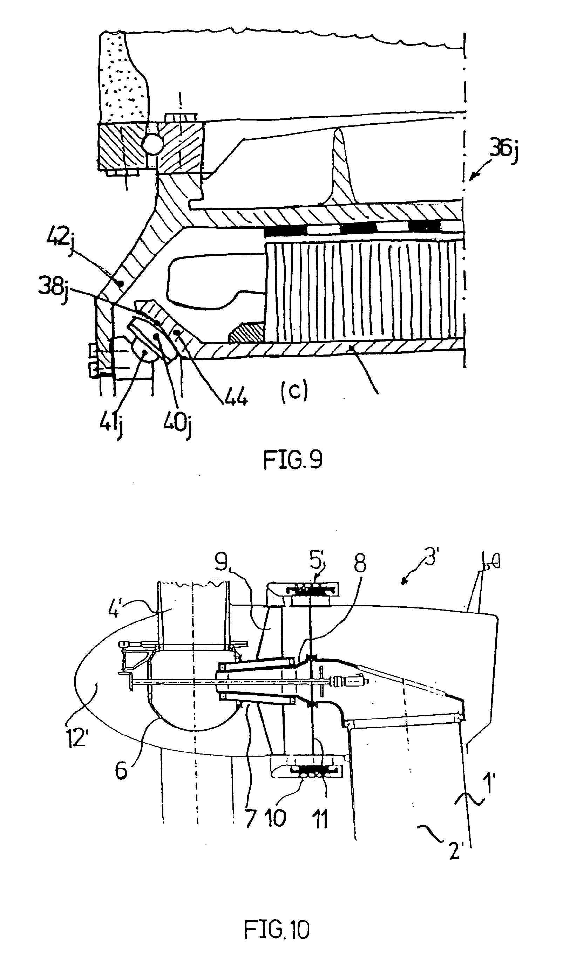

Es wird zunächst auf die bekannte Windenergieanlage von Fig. 10 Bezug genommen. Auf der Spitze eines Trägerturm 1' ist um eine vertikale Achse 2' drehbar eine Baugruppe 3' mit einem Windrotor 4' und einem vielpoligen Synchrongenerator 5' angeordnet.

Der um eine Achse 12' drehbare Windrotor 4' ist über ein die Flügel des Rotors tragenden Mittelstück 6 mit einer Nabe 7 verbunden, die auf einer Hohlachse 8 unter fliegender Lagerung des Windrotors zweifach gelagert ist.

Die Nabe 7 steht über radiale Stege bzw. Flansche 9 in Verbindung mit dem Läuferring 10 des Synchrongenerators 5', auf dessen Innenseite Permanentmagnete angeordnet sind. Ein Ständerwicklungen aufweisender Ständer 11 ist starr mit der Hohlachse 8 verbunden.

Wie sich Fig. 10 entnehmen lässt, sind der Windrotor 4', die Nabe 7 und der Generator 5' dieser bekannten Windenergieanlage in Richtung der Drehachse 12' des Rotors 4' aufeinanderfolgend angeordnet.

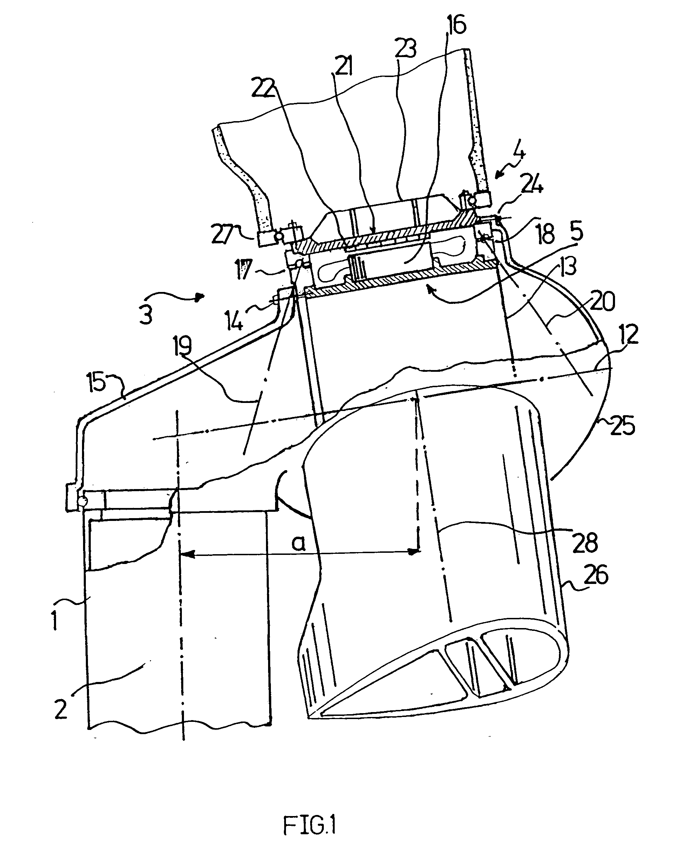

Fig. 1 zeigt eine Windenergieanlage mit einem Trägerturm 1 und einer auf dem Trägerturm um eine vertikale Achse 2 drehbaren Baugruppe 3. Wie die Baugruppe 3' von Fig. 10 weist die Baugruppe 3 einen um eine Achse 12 drehbaren Windrotor 4 auf, der in direkter Antriebsverbindung mit einem vielpoligen Synchrongenerator 5 steht.

Zur Bildung des Ständers des Synchrongenerators 5 dient eine rohrförmige Tragstruktur 13, welche bei 14 starr mit einem Trägergehäuse 15 der Baugruppe 3 verbunden ist. Das Trägergehäuse 15 einschließlich der rohrförmigen Tragstruktur 13, deren Durchmesser in dem betreffenden Ausführungsbeispiel etwa 3 m beträgt, ist zur Durchführung von Reparatur und Wartungsarbeiten begehbar.

Das Bezugszeichen 16 weist auf an der Außenseite der rohrförmigen Tragstruktur 13 angeordnete Ständerwicklungen des Generators 5 hin.

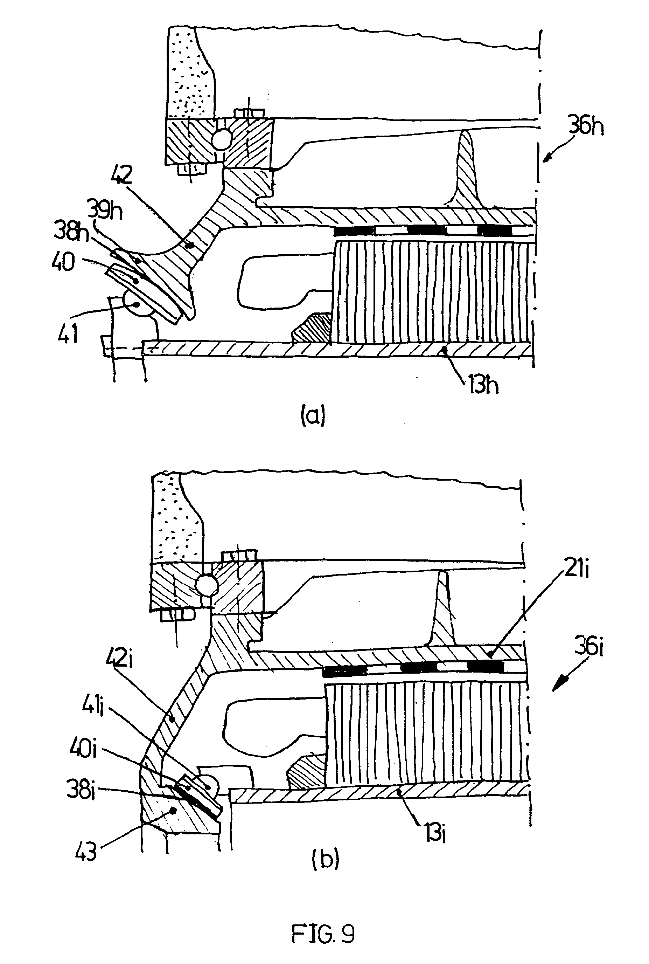

An beiden axialen Enden der rohrförmigen Tragstruktur 13 ist jeweils ein Lager 17 bzw. 18 angeordnet, wobei es sich bei den beiden Lagern um Wälzlager handelt, die gemäß Strichpunktlinien 19 und 20, welche Verbindungslinien der Auflagepunkte der Wälzkörper entsprechen, eine O-Anordnung bilden. Anstelle von Wälzlagern könnten auch Gleitlager vorgesehen sein wie sie, z.B. in Fig. 9 dargestellt sind.

Außenseitig sind die Lager 17 und 18 mit einem Läuferring 21 verbunden, der auf seiner Innenseite Permanentmagnete 22 trägt und dessen Außenseite Versteifungsrippen 23 aufweist. Mit dem Läuferring 21 drehbar ist eine bei 24 mit dem Läuferring verbundene Frontabdeckung 25.

Auf dem Läuferring 21 sind drei Flügel 26 des Windrotors 4 angeordnet, wobei der Läuferring 21 eine Nabe des Windrotors 4 bildet. Die Rotorflügel 26 sind jeweils auf einem Lager 27 um eine Flügellängsachse 28 drehbar. Ein jedem Flügel 26 zugeordneter Drehantrieb, der an einem Zahnkranz außen am Lager 27 angreift und zur Verstellung der Flügeldrehlage in bezug auf die Achse 28 dient, ist in Fig. 1 nicht gezeigt.

Die Baugruppe 3 der Windenergieanlage von Fig. 1 ist in Richtung der Rotordrehachse 12 gegenüber der Baugruppe 3' der Windenergieanlage von Fig. 10 deutlich verkürzt, fast halbiert. Der Abstand a zwischen der Drehachse 2 des Trägerturms 1 und der Längsachse 28 der Flügel 26 ist nicht viel größer als die Summe aus dem Turmradius und der betreffenden Breitenausdehnung des Flügels 26.

Neben einer vorteilhaften Verkürzung der Baugruppe 3 wird gegenüber der Windenergieanlage von Fig. 10 auch Material und Masse eingespart, indem der Läuferring einen integralen Bestandteil der Nabe bildet. Ferner entfällt gegenüber der Windenergieanlage von Fig. 10 Materialaufwand für Haltestege, radiale Stege bzw. Flansche und das Mittelstück 6 des Rotors. Die geringere Überhangslast der Baugruppe 3 führt auch zu Materialeinsparungen beim Trägergehäuse 15.

Durch die O-Anordnung lassen sich über die Lager 17 und 18 an den Flügeln senkrecht zur Rotorebene angreifende Kippkräfte abtragen.

Die Versteifungen 23 sorgen für eine hohe Formbeständigkeit des Läuferrings 21 und damit für eine konstante Geometrie des Luftspalts des Generators. Zur Konstanthaltung der Luftspaltgeometrie trägt außerdem die Anordnung der Lager 17 und 18 in radialer Nähe zum Luftspalt bei.

In den nachfolgenden Figuren sind gleiche oder gleichwirkende Teile jeweils mit derselben Bezugszahl wie in Fig. 1 bis 3 bezeichnet, wobei den betreffenden Bezugszahlen der Buchstabe a, b usw. beigefügt ist.

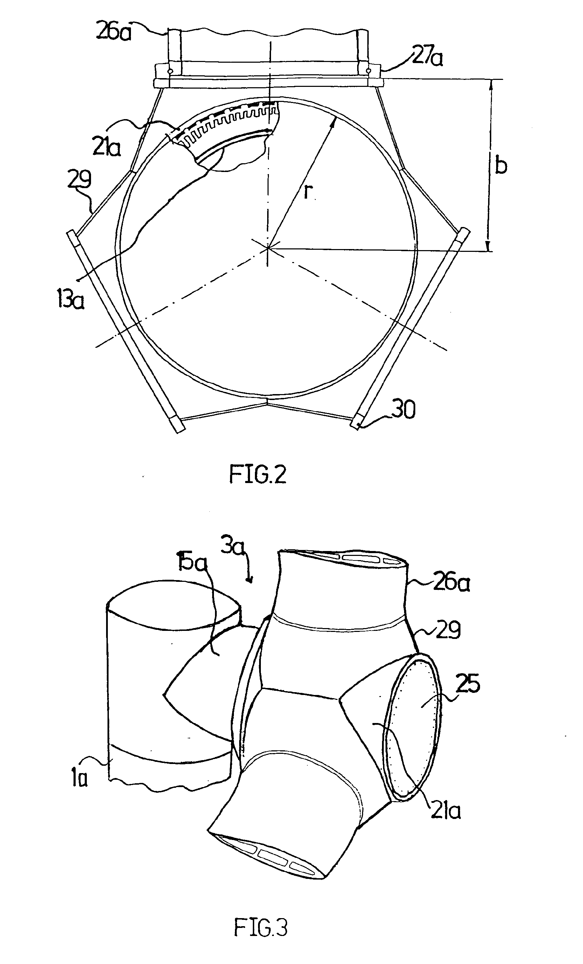

Fig. 2 zeigt einen Teil eines Windrotors 4a mit einem eine Nabe bildenden Läuferring 21 a, innerhalb welchem ein Ständer mit einer rohrförmigen Tragstruktur 13a angeordnet ist.

Von dem Läuferring 21 a erstrecken sich im Winkelabstand von 120° drei konische, mit dem Läuferring z.B. durch Schweißen verbundene Rohransätze 29 mit einem Flansch 30 für die Aufnahme eines Lagers 27a, auf dem ein sich an die Rohransätze 29 anschließender Rotorflügel 26a drehbar gelagert ist. Der Läuferring und die konischen Rohransätze bilden ein mechanisch sehr stabiles Mittelstück des Rotors.

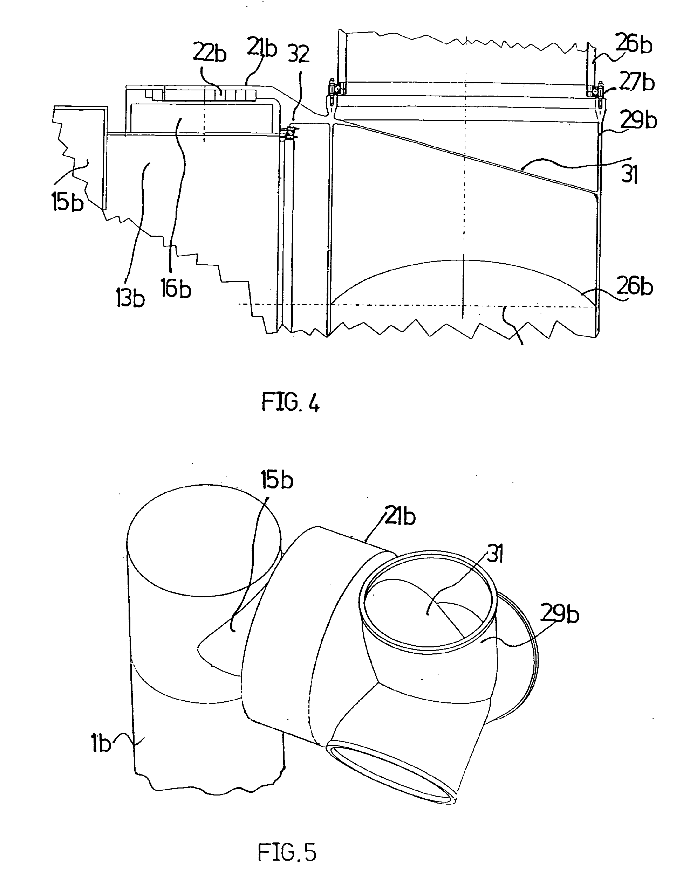

Bei dem Ausführungsbeispiel von Fig. 4 und 5 ist ein Läuferring 21 b vorgesehen, welcher eine konische Verlängerung 31 aufweist, auf der Rohransätze 29b zur jeweiligen Aufnahme eines drehbar gelagerten Rotorflügels 26b angeordnet sind. Die Baueinheit aus Läuferring 21 b und Verlängerung 31 ist über ein einziges, zur Abtragung von zur Rotorebene senkrechten Kippkräften geeignetes Momentenwälzlager 32 auf einer rohrförmigen Tragstruktur 13b gelagert, welche mit Ständerwicklungen 16b versehen ist, die an der Innenseite des Läuferrings 21 b angebrachten Permanentmagneten 22b gegenüberliegen.

Gegenüber der Windenergieanlage von Fig. 10 wird auch bei dieser Windenergieanlage eine Verkürzung des Überhangs der Rotor-/Generatorbaugruppe sowie eine Materialeinsparung erreicht. Eine gesonderte Nabe sowie radiale Stege für deren Halterung entfallen.

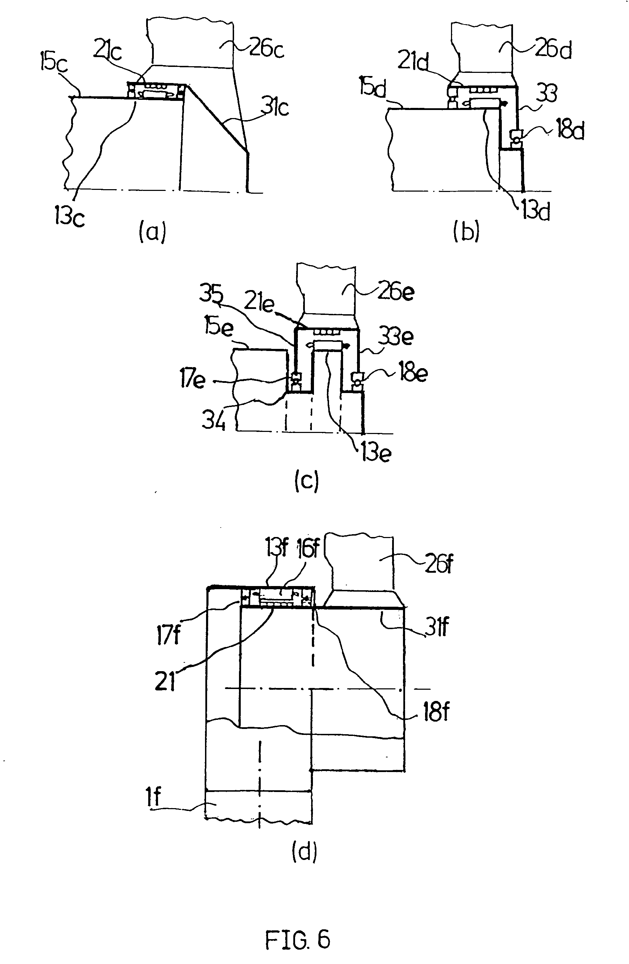

Auch bei dem Ausführungsbeispiel von Fig. 6a ist ein Läuferring 21 c mit einer konischen axialen Verlängerung 31 c versehen. Während bei dem Ausführungsbeispiel von Fig. 4 und 5 die Rotorflügel 26b zum Läuferring axial versetzt lediglich auf der Verlängerung 31 angeordnet sind, erstreckt sich bei dem Ausführungsbeispiel von Fig. 6a ein Rotorflügel 26c in seiner Breite axial sowohl über den Läuferring 21 c als auch über dessen Verlängerung 31 c.

Bei dem Ausführungsbeispiel von Fig. 6b ist ein Läuferring 21 d an einem Ende mit einem radial nach innen vorstehenden Flansch 33 versehen und auf einer Abstufung einer rohrförmigen Tragstruktur 13d über ein Lager 18d gelagert. Das Lager 18d ist gegenüber dem Lager 18 des Ausführungsbeispiels von Fig. 1 und 2 im Durchmesser verringert.

Bei dem Ausführungsbeispiel von Fig. 6c weist eine rohrförmige Tragstruktur 13e eine Einbuchtung 34 auf, in welcher ein Lager 17e angeordnet ist. Ein Trägerring 21 e weist einen weiteren nach innen vorstehenden, auf dem Lager 17e aufsitzenden Flansch 35 auf.

Das Ausführungsbeispiel von Fig. 6d unterscheidet sich von den vorangehenden Ausführungsbeispielen u.a. dadurch, dass ein Läuferring21f mit einer Verlängerung 31f auf der Innenseite einer rohrförmigen, innenseitig mit Ständerwicklungen 16f versehenen Tragstruktur 13f angeordnet ist. Eine rohrförmige Tragstruktur 13f ist direkt über der Spitze des Trägerturms 1 f angeordnet, so dass sich der seitliche Überhang des Rotors im wesentlichen auf die Breite der Rotorflügel beschränken kann.

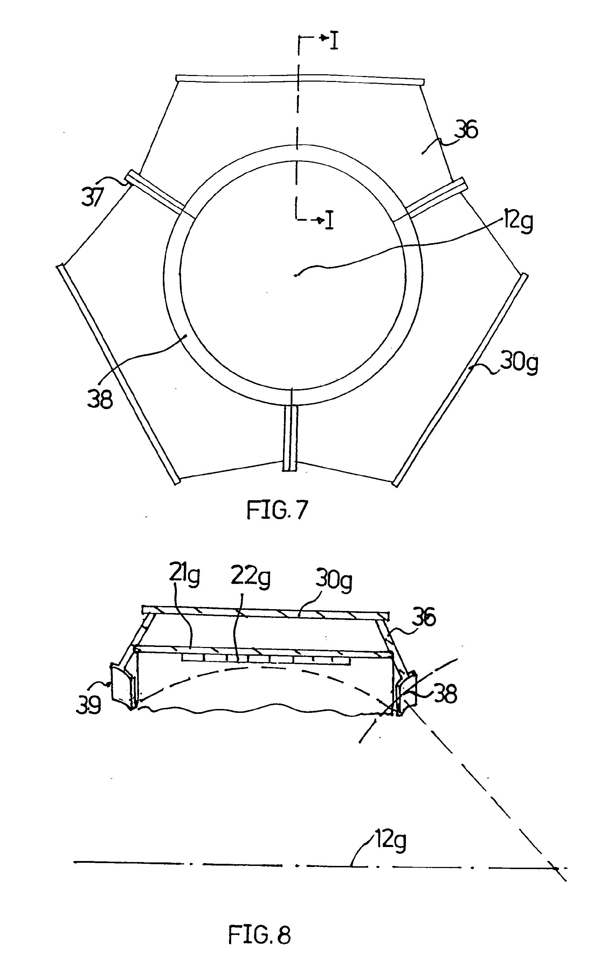

Es wird nun auf die Fig. 7 und 8 Bezug genommen, wo eine weitere Rotornabe mit einen Flansch 30g aufweisenden Rohransätzen gezeigt ist. Die Rotornabe weist in dem betreffenden Ausführungsbeispiel drei in ihrer Form übereinstimmende Segmente 36 auf, die über Flansche 37 miteinander verbunden sind.

Innerhalb der Nabe ist ein mit den Segmenten 36 verbundener Läuferring 21g mit Permanentmagneten 22g angeordnet, wobei der Läuferring den Segmenten 36 entsprechende Segmente aufweist oder durchgehend ausgebildet sein kann.

Bei Segmentbauweise des Läuferrings sind zweckmäßig an den Verbindungsenden nach außen abgewinkelte Flansche gebildet, über welche die Segmente miteinander verbunden werden können und welche ferner ihrer Formstabilisierung dienen. Solche in Form und Abmessungen übereinstimmende Segmente lassen sich aus glasfaserverstärktem Kunststoff herstellen, wobei vorteilhaft nur ein einziges Formwerkzeug zur Verfügung stehen muß.

Die gemäß Fig. 7 miteinander verbundenen Segmente 36 weisen eine zur Windrotordrehachse 12g koaxiale ringförmige Gleitlagerfläche 38 auf, welche einer Kugeloberfläche entspricht, deren Mittelpunkt auf der Drehachse 12g liegt. Wie aus Fig. 8 hervorgeht, ist die Gleitlagerfläche 38 durch Randaufweitungen 39 der Segmentwand gebildet.

Fig. 9a zeigt eine unter Verwendung entsprechender Segmente 36h gebildete Lagerung. In ringförmige Gleitflächen 38h, die an Ringstegen 42 durch Aufweitungen 39h gebildet sind und einer Kugeloberfläche entsprechen, greifen Gleitsegmente 40 ein, die eine an die Gleitfläche 38h angepasste Gleitfläche aufweisen und bei 41 verschwenkbar an einer ringförmigen Tragstruktur 13h mit Ständerwicklungen 16h angebracht sind.

Durch die schwenkbare Lagerung der Gleitsegmente 40 ist stets gesichert, dass die kugelförmigen bzw. im Querschnitt kreisförmigen Gleitflächen stets gegeneinander anliegen.

Bei dem Ausführungsbeispiel von Fig. 9b ist mit einem Läuferring 21 i ein Ringsteg 42i mit einer nach innen vorstehenden Abwinklung 43 gebildet, auf der eine kegel- oder kugelförmige Gleitfläche gebildet ist. Auf der Gleitfläche sitzen bei 41 i schwenkbar mit einer ringförmigen Tragstruktur 13i verbundene Gleitsegmente 40i auf.

Bei dem Ausführungsbeispiel von Fig. 9c ist mit einer rohrförmigen Tragstruktur 13j ein Lagerring 44 mit einer kugelförmigen Gleitlagerfläche gebildet, in die ein Gleitsegment 40j eingreift, das mit einem dem Ringsteg 42 von Fig. 9a entsprechenden Ringsteg 42j verbunden ist. Die Ausführungsform von Fig. 9b und 9c haben den besonderen Vorteil, dass sich in den Gleitflächen der Ringe 43 und 44 auf der Unterseite Schmieröl sammeln kann, das beim Anfahren des Rotors für die notwendige Anfangsschmierung sorgt. Im Fall 9a muß vor dem Anfahren des Rotors den Lagerflächen durch Pumpeinrichtungen Öl zugeführt werden.

Die Gleitflächen 38h, 38i und 38j können die Form von Hohlkegeln oder Hohlkugeln haben, deren Rotationsachse mit der Drehachse des Generators zusammenfällt.

## Patentansprüche

1. Windenergieanlage für Nennleistungen im Megawattbereich, deren Windrotor (4) drei Flügel (26) aufweist und direkt mit einem Magnete (22) tragenden Läuferring (21) eines Generators (5) verbunden ist, wobei die Flügel (26) des Windrotors (4) auf dem Läuferring (21) angeordnet sind,
**dadurch gekennzeichnet,**
**dass** die Flügel (26) mit dem Läuferring (21), um ihre Längsachse drehbar, jeweils über ein an dem Läuferring (21) einen Rohransatz bildendes Segment (36) verbunden sind, dass die Segmente (36) baugleich sind und sich jeweils über ein Drittel des Umfangs des Läuferrings (21) erstrecken und dass die mit dem Läuferring (21) verbundenen Segmente (36) untereinander über an den Segmenten gebildete Flansche (37) verbunden sind.

2. Windenergieanlage nach Anspruch 1,
**dadurch gekennzeichnet,**
**dass** der Windrotor (4) auf mehreren, zueinander axial im Abstand angeordneten Lagern (17,18) drehbar ist.

3. Windenergieanlage nach Anspruch 1 oder 2,
**dadurch gekennzeichnet,**
**dass** der Windrotor (4) auf einer rohrförmigen, die Ständerwicklungen (16) des Generators (5) haltenden Tragstruktur (13) gelagert ist.

4. Windenergieanlage nach einem der Ansprüche 1 bis 3,
**dadurch gekennzeichnet,**
**dass** die Lager radial nahe dem Luftspalt des Generators (5) angeordnet sind/ist.

5. Windenergieanlage nach einem der Ansprüche 1 bis 4,
**dadurch gekennzeichnet,**
**dass** zur Lagerung des Windrotors (4) eine zur Rotorebene senkrechte Kippkräfte abtragende Momentenlagerung vorgesehen ist.

6. Windenergieanlage nach Anspruch 5,
**dadurch gekennzeichnet,**
**dass** die Lagerung durch zwei Gleit- oder Wälzlager (17, 18) in O-Anordnung gebildet ist.

7. Windenergieanlage nach Anspruch 5 oder 6,
**dadurch gekennzeichnet,**
**dass** die Gleitflächen (38) der Gleitlagerung die Form einer Kegel- oder Kugeloberfläche aufweist.

8. Windenergieanlage nach einem der Ansprüche 5 bis 7,
**dadurch gekennzeichnet,**
**dass** die Lagerung, vorzugsweise schwenkbewegliche, Gleitsegmente (40) umfasst.

9. Windenergieanlage nach einem der Ansprüche 5 bis 8,
**dadurch gekennzeichnet,**
**dass** zur Schmierung der Lagerung und Kühlung der Ständerwicklungen ein gemeinsamer Ölkreislauf gebildet ist.

10. Windenergieanlage nach einem der Ansprüche 1 bis 9,
**dadurch gekennzeichnet,**
**dass** der Läuferring (21g) aus mehreren, vorzugsweise drei, Segmenten zusammengesetzt ist.

11. Windenergieanlage nach Anspruch 10,
**dadurch gekennzeichnet,**
**dass** an den Verbindungsenden der Segmente des Läuferrings (21g) ein Flansch gebildet ist.

12. Windenergieanlage nach einem der Ansprüche 1 bis 11,
**dadurch gekennzeichnet,**
**dass** das einen Rohransatz bildende Segment einen Flansch (30) für die Aufnahme eines Lagers (27) zur drehbaren Lagerung des Rotorflügels (26) aufweist.

13. Windenergieanlage nach einem der Ansprüche 1 bis 12,
**dadurch gekennzeichnet,**
**dass** die je einen Rohransatz bildenden Segmente (36) Randaufweitungen (39) zur Bildung eines Lagersitzes oder einer Gleitlagerfläche (38) für die Lagerung des Windrotors aufweisen.

14. Windenergieanlage nach einem der Ansprüche 6 bis 13,
**dadurch gekennzeichnet,**
**dass** die Gleitlager Gleitsegmente (40) aufweisen.

15. Windenergieanlage nach einem der Ansprüche 1 bis 14,
**dadurch gekennzeichnet,**
**dass** der Läuferring (21) auf seiner den Magneten (22) abgewandten Seite Versteifungsrippen (23) aufweist.

## Claims

1. Wind turbine generator system for rated power outputs in the megawatt range, the wind rotor (4) of which has three vanes (26) and is connected directly to a rotor ring (21) of a generator (5) carrying magnets (22), the vanes (26) of the wind rotor (4) being arranged on the rotor ring (21), **characterized in that** the vanes (26) are connected to the rotor ring (21), rotatably about the longitudinal axis of the latter, in each case by way of a segment (36) respectively forming a pipe neck on the rotor ring (21), **in that** the segments (36) are of the same construction and respectively extend over a third of the circumference of the rotor ring (21) and **in that** the segments (36) that are connected to the rotor ring (21) are connected to one another by way of flanges (37) formed on the segments.

2. Wind turbine generator system according to Claim 1, **characterized in that** the wind rotor (4) is rotatable on multiple bearings (17, 18) arranged axially at a distance from one another.

3. Wind turbine generator system according to Claim 1 or 2, **characterized in that** the wind rotor (4) is mounted on a tubular carrying structure (13), holding the stator windings (16) of the generator (5).

4. Wind turbine generator system according to one of Claims 1 to 3, **characterized in that** the bearings are arranged radially near the air gap of the generator (5).

5. Wind turbine generator system according to one of Claims 1 to 4, **characterized in that** a torque mounting that carries away tilting forces perpendicular to the plane of the rotor is provided for the mounting of the wind rotor (4).

6. Wind turbine generator system according to Claim 5, **characterized in that** the mounting is formed by two sliding or rolling bearings (17, 18) in an 0 arrangement.

7. Wind turbine generator system according to Claim 5 or 6, **characterized in that** the sliding faces (38) of the sliding mounting have the form of a surface of a cone or sphere.

8. Wind turbine generator system according to one of Claims 5 to 7, **characterized in that** the mounting comprises sliding segments (40), preferably pivotally movable sliding segments (40).

9. Wind turbine generator system according to one of Claims 5 to 8, **characterized in that** a common oil circuit is formed for lubricating the mounting and cooling the stator windings.

10. Wind turbine generator system according to one of Claims 1 to 9, **characterized in that** the rotor ring (21g) is made up of multiple segments, preferably three.

11. Wind turbine generator system according to Claim 10, **characterized in that** a flange is formed on the connecting ends of the segments of the rotor ring (21g).

12. Wind turbine generator system according to one of Claims 1 to 11, **characterized in that** the segment forming a tube neck has a flange (30) for receiving a bearing (27) for the rotatable mounting of the rotor vane (26).

13. Wind turbine generator system according to one of Claims 1 to 12, **characterized in that** the segments (36) respectively forming a tube neck have peripheral widenings (39) for forming a bearing seat or a sliding bearing face (38) for the mounting of the wind rotor.

14. Wind turbine generator system according to one of Claims 6 to 13, **characterized in that** the sliding bearings have sliding segments (40).

15. Wind turbine generator system according to one of Claims 1 to 14, **characterized in that** the rotor ring (21) has stiffening ribs (23) on its side facing away from the magnets (22).

## Revendications

1. Installation éolienne pour des puissances nominales dans la plage des mégawatts, dont le rotor éolien (4) présente trois pales (26) et est raccordé directement à un anneau d'induit (21) d'un générateur (5) portant des aimants (22), les pales (26) du rotor éolien (4) étant agencées sur l'anneau d'induit (21), **caractérisée en ce que** les pales (26) sont reliées à l'anneau d'induit (21), en étant rotatives autour de leur axe longitudinal, à chaque fois via un segment (36) formant une tubulure sur l'anneau d'induit (21), **en ce que** les segments (36) sont de construction identique et s'étendent à chaque fois sur un tiers de la périphérie de l'anneau d'induit (21) et **en ce que** les segments (36) reliés à l'anneau d'induit (21) sont reliés les uns aux autres via des brides (37) formées sur les segments.

2. Installation éolienne selon la revendication 1, **caractérisée en ce que** le rotor éolien (4) est rotatif sur plusieurs paliers (17, 18) agencés axialement à une certaine distance les uns des autres.

3. Installation éolienne selon la revendication 1 ou 2, **caractérisée en ce que** le rotor éolien (4) est logé sur une structure support (13) tubulaire, tenant les bobines de stator (16) du générateur (5).

4. Installation éolienne selon l'une quelconque des revendications 1 à 3, **caractérisée en ce que** le ou les paliers sont disposés radialement à proximité de l'entrefer du générateur (5).

5. Installation éolienne selon l'une quelconque des revendications 1 à 4, **caractérisée en ce qu'**un palier à couple évacuant les forces de basculement perpendiculaires au plan du rotor est prévu pour le logement du rotor éolien (4).

6. Installation éolienne selon la revendication 5, **caractérisée en ce que** le palier est formé par deux paliers à glissement ou à roulement (17, 18) dans une disposition en O.

7. Installation éolienne selon la revendication 5 ou 6, **caractérisée en ce que** les surfaces de glissement (38) du palier à glissement présentent la forme d'une surface conique ou sphérique.

8. Installation éolienne selon l'une quelconque des revendications 5 à 7, **caractérisée en ce que** le palier comprend des segments de glissement (40) de préférence mobiles pivotants.

9. Installation éolienne selon l'une quelconque des revendications 5 à 8, **caractérisée en ce qu'**un circuit à huile commun est formé pour la lubrification du palier et le refroidissement des bobines de stator.

10. Installation éolienne selon l'une quelconque des revendications 1 à 9, **caractérisée en ce que** l'anneau d'induit (21g) est composé de plusieurs segments, de préférence trois.

11. Installation éolienne selon la revendication 10, **caractérisée en ce qu'**une bride est formée aux extrémités de raccordement des segments de l'anneau d'induit (21g).

12. Installation éolienne selon l'une quelconque des revendications 1 à 11, **caractérisée en ce que** le segment formant une tubulure présente une bride (30) destinée à recevoir un palier (27) pour le logement rotatif de la pale (26) du rotor.

13. Installation éolienne selon l'une quelconque des revendications 1 à 12, **caractérisée en ce que** les segments (36) formant à chaque fois une tubulure présentent des élargissements (39) de bord pour former un siège de palier ou une surface de palier à glissement (38) pour le logement du rotor éolien.

14. Installation éolienne selon l'une quelconque des revendications 6 à 13, **caractérisée en ce que** les paliers à glissement présentent des segments de glissement (40).

15. Installation éolienne selon l'une quelconque des revendications 1 à 14, **caractérisée en ce que** l'anneau d'induit (21) présente sur sa face opposée aux aimants (22) des ailettes de renforcement (23).
